Europäisches Patentamt

European Patent Office

Office européen des brevets

(11) Publication number: **0 354 022**
**A2**

## (12) EUROPEAN PATENT APPLICATION

(21) Application number: **89307870.9**

(22) Date of filing: **02.08.89**

(51) Int. Cl.⁵: **B 64 C 21/10**

(30) Priority: **05.08.88 US 229006**

(43) Date of publication of application:
**07.02.90 Bulletin 90/06**

(84) Designated Contracting States:
**AT BE DE ES FR GB GR IT LU NL SE**

(71) Applicant: **MINNESOTA MINING AND MANUFACTURING COMPANY**
**3M Center, P.O. Box 33427**
**Saint Paul, MN 55133- 3427 (US)**

(72) Inventor: **Marentic, Francis J. c/o Minnesota Mining and Manufacturing Co. 2501 Hudson Road P.O. Box 33427 St. Paul Minnesota 55133-3427 (US)**

(74) Representative: **Baillie, Iain Cameron et al**
**c/o Ladas & Parry Isartorplatz 5**
**D-8000 München 2 (DE)**

(54) Drag reduction article.

(57) A flexible and/or stretchable substrate having attached to one surface thereof small individual sections of a film, each section having a patterned surface capable of reducing drag resistance when a fluid flows thereover, the sections being attached at the leading edge thereof to the substrate, and being applied in an overlapping cascade array, i.e., wherein the trailing edge of each section overlaps at least one leading attached edge of adjacent sections.

*FIG. 1*

Description

## DRAG REDUCTION ARTICLE

### Technical Field

This invention relates to the reduction of drag caused by fluids, such as water, flowing across a surface, and more particularly when the surface is flexible and/or stretchable.

### Background Art

In U.S. patent application Serial No. 740,239, incorporated herein by reference, there is disclosed an article which can be applied to a surface to reduce drag. Basically, the article is a film having a pattern thereon, the pattern being capable of reducing drag caused by fluids flowing over such articles. While film articles having a pattern surface thereon disclosed in such application are taught to be flexible in and of themselves, such films are currently limited to applications on rigid substrates, such as metal or plastic used to manufacture aircraft, boats, or automobiles. Such material cannot be applied as a uniform film over a flexible and/or stretchable substrate, because the stretchability or flexibility of such a substrate would be vastly reduced by using an integral film material thereon.

I have now discovered a technique whereby one can completely cover a fabric or substrate having flexibility and/or stretchability with a drag reduction material that is in essence non-stretchable. This technique allows the fabric or substrate to maintain its flexible and stretchable characteristics while the drag reducing film materials maintain their particular characteristics, i.e., being capable of acting as a drag reduction medium on the fabric or substrate and being non-stretchable.

This technique can thus be utilized to apply a relatively rigid drag reduction film to a flexible fabric, such as swimwear, wet suits, and other appropriate apparel.

### Disclosure of the Invention

The article of the invention comprises a flexible and/or stretchable substrate having attached to one surface thereof small individual sections of a film, each film having a patterned surface capable of reducing drag resistance when a fluid flows thereover, the sections being attached at the leading edge thereof to the substrate, and being applied in an overlapping cascade array, i.e., wherein the trailing edge of each section overlaps at least one leading attached edge of adjacent sections.

In this fashion, a swimsuit, for example, which is typically made from a flexible and stretchable fabric, can be basically completely covered with a material capable of reducing drag when water passes thereover without diminishing the flexibility or stretchability of the underlying fabric of the swimsuit itself.

### Brief Description of the Drawings

Figure 1 is a top view of one embodiment of the invention.

Figure 2 is a top view of one individual film section, and Figure 3 is an enlarged sectional view taken along 3-3 of Figure 2 and illustrating the pattern contained on the surface of the film section.

### Detailed Description

Individual film sections can be typically cut from a film master or blank such as those disclosed in the aforementioned copending Application Serial No. 740,239. Therein it is disclosed that the film typically has a thickness from about 50 to 650 microns thick. This allows selection from a number of polymeric materials, such as polyolefins (e.g., polyethylene, unoriented polypropylene, ethylene/ vinyl acetate polymers, ethylene/ethyl acrylate polymers), vinyl polymers (e.g., polyvinyl chloride, vinyl chloride/vinyl acetate polymers, vinyl chloride/vinyl alcohol polymers, polyvinylidene chloride), polyurethanes (e.g., polyester and polyether urethanes), cellulosic films (e.g., cellulose acetate), and polyamide films (e.g., nylon). Because flexibility of the individual film sections is basically immaterial, the patterned master or blank could also be a substantially rigid material, such as a metal. Accordingly the term "film" should be construed broadly enough to include such materials.

Other materials which may be employed to provide the film master are radiation curable materials which generally comprise a radiation curable monomer or prepolymer and an initiator. The monomer or prepolymer generally contains at least two groups capable of reacting to form a polymer. A variety of such materials are known and include materials having functional ethylenically unsaturated groups (e.g., vinyl groups, acrylate and methacrylate groups, etc.). These materials are typically applied over a carrier or base.

Conventional additives such as plasticizers, extenders, antioxidants, etc. may be utilized in polymeric film masters. Typically, such additives may each comprise up to 5 parts by weight of the film itself.

While the exact material used to provide the invention is not critical, obviously certain materials may be better suited for particular applications. For example, water-resistant materials will obviously be better suited for use in water environments than water-sensitive materials.

The film sections can typically be adhered to the underlying substrate at their leading edge by contact using an adhesive material, such as a pressure-sensitive adhesive. Examples of suitable pressure-sensitive adhesives include polyacrylates, natural rubber adhesives, and thermoplastic rubber materials. Such materials are commercially available, and should be chosen to allow satisfactory adhesion at the leading edge and be insensitive to the particular fluid medium that one is working with. For example, if film sections are being attached to a swimsuit, the adhesive must be insensitive to water.

In addition, mechanical fastening techniques such as sewing or stapling of the leading edge of the film section, can be successfully utilized.

The article of the invention can readily be prepared by application of small sections of the patterned film thereto. Preferably, the film sections are positioned on the substrate such that the patterned surface will provide maximum drag reduction. When the patterned surface comprises parallel peaks and valleys, maximum drag reduction is achieved when the peaks and valleys are generally parallel to fluid flow. In addition, other patterned surfaces are available, these being disclosed in the aforementioned copending U.S. application Serial No. 740,239.

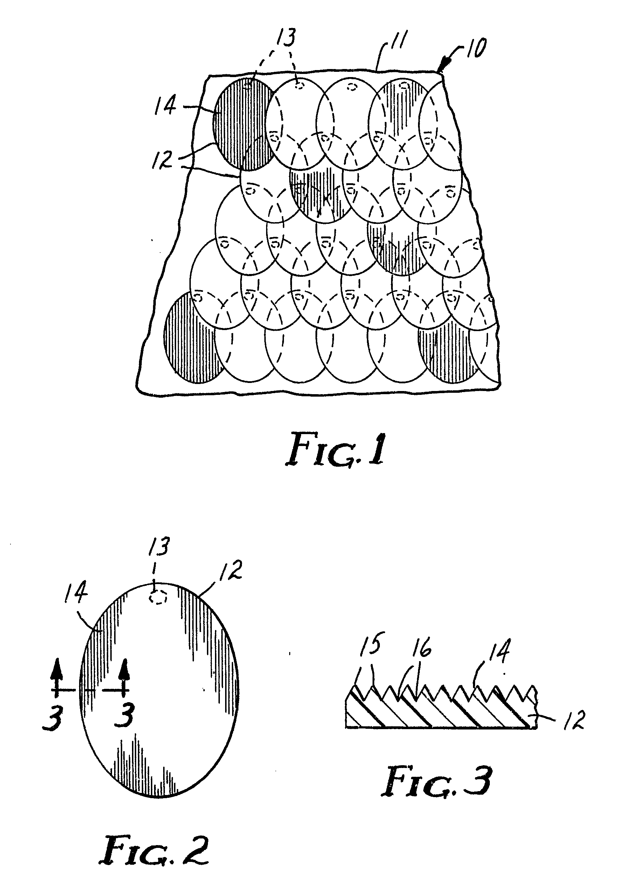

One embodiment of the invention is shown in the drawings. Figure 1 illustrates an article 10 comprising a flexible substrate 11 having oval sections 12 having patterns 14, sections 12 being attached to substrate 11 at each leading edge by means of adhesive 13. Oval sections 12 are illustrated to be applied in an overlapping cascade array, similar to the scales of a fish, wherein the trailing edge of each section overlaps the attached leading edge of adjacent sections. In this embodiment, since the sections are oval in shape, the sidewalls of adjacent sections are also overlapped so as to maximize the surface area of the patterned film to the fluid flow. In other words, very little if any of the substrate material is not covered by patterned section 12, so as to maximize contact surface with the fluid medium. In the case of a swimsuit, the swimsuit fabric would be in essence totally covered by the patterned disks, yet the requisite characteristics of flexibility and stretchability of the fabric itself would be substantially undisturbed.

Figure 2 illustrates oval film section 12 with patterns 14 and underlying adhesive 13 hidden from view. A section at 3-3 indicates the parallel peak 15 and valley 16 of pattern 14 on the surface of oval disk 12.

The dimensions of peaks 15 and valleys 16 are not critical provided that whatever patterned surface is employed provides a reduction in drag. However, optimum drag reduction can be achieved by varying the pattern depending on use conditions, i.e., speed, fluid medium and substrate material. For example, a swimsuit might have a different optimum pattern that the sail of a boat.

Peak to peak spacing between adjacent peaks is similarly likewise not critical to the invention, and it has been found that a spacing of from 20 to 400 microns is suitable. The included angle between adjacent peaks can also vary. For example, while flat and round-bottom valleys have been found to be useful, it is preferred that the valleys be generally v-shaped and have an included angle from 15° to 140°, and more preferably from 50 to 60°. Again, factors such as speed and fluid medium must be considered when selecting these design characteristics for optimum drag reduction.

Adhesive 13 is applied at the leading edge of disk 12 so as to minimize the effect of the attachment of the disk to underlying substrate 11. In this manner, if substrate 11 is a stretchable material, such as a swimsuit fabric, the necessary stretchable characteristic thereof will not be impaired.

Patterned surface 14 may be provided in-situ on the film from which sections 12 are cut, or it may be applied as a layer onto a carrier film. In the latter instance, the two materials must be capable of adhering together by themselves or be capable of being adhered together tenaciously.

The film master from which individual sections 12 are prepared can be manufactured by several techniques. For example, a sheet material may be extruded through a die capable of forming the patterned surface. Alternatively, the patterned surface may be formed by embossing techniques utilizing heat and/or pressure. Other techniques are possible as well, as will be understood by those in the art.

One specific useful embossing technique comprises extruding or casting a sheet material and contacting the sheet while it is still hot with an engraved, chilled cylinder bearing the negative structure of the desired pattern. The sheet may then be cooled on the cylinder.

Another useful technique comprises applying a radiation-curable composition to a carrier, such as a polyester film, contacting the radiation-curable composition with a master bearing the negative structure of the desired pattern, followed by radiation curing of the compositon and removal of the resulting structure from the master.

Individual film sections may then be die cut or stamped using the individual pattern desired. Following this, the back surface, i.e., that opposite the patterned surface, can then be contacted with an appropriate adhesive for attachment to the underlying substrate in the overlapping cascade array illustrated in Figure 1, or other attachment means can be utilized.

As desired, the film master used to make the individual sections may be provided as an opaque, translucent or transparent item. In addition, graphic designs or colors may be incorporated into the film. By keeping the film transparent, and thus each individual section transparent, the underlying colors of the substrate to which the sections are attached will be exhibited.

The invention will now be more fully described in the following non-limiting example, wherein all parts are by weight unless otherwise specified.

## Example

A radiation curable composition having the following ingredients was roll coated onto a 3 mil polyester film to a thickness of 300 microns.

| Components | Parts |
|---|---|
| Urethane acrylate oligomer ("XP51"-85 available from Cargile) | 67.9 |
| Tetraethylene glycol diacrylate ("SR"-268 available from Sartomer Company) | 19.2 |
| Diethoxyacetophenone ("DEAP" available from Upjohn) | 4.8 |
| Fluorochemical surfactant ("FC"-431 available from Minnesota Mining and Manufacturing Company) | 2.7 |
| N-vinyl pyrrolidone (available from GAF) | 4.9 |
| UV light stabilizer ("Tinuvin" 770 available from Ciba Geigy) | 0.5 |

The resulting construction was then laminated to an engraved surface using a laminator pressure of 3 kg/cm$^2$ and a laminator speed of 9 meters/minute.

The radiation curable composition was exposed through the polyester to ultraviolet light in a Linde UV Processor from Union Carbide Corporation to cure it. Exposure conditions were:

Processor length: 2.4 meters
Processor speed: 9 meters/min.
UV Exposure level: 2 passes at 1.45 J/cm$^2$ ea.
Processor N$_2$ level: 220 ft$^3$/hr. - ft. width

The resulting construction was removed from the engraved surface revealing a patterned surface having a cross section similar to that of FIG. 3.

## Claims

1. An article comprising a flexible and/or stretchable substrate having attached to one surface thereof small sections of a film, said film having a patterned surface thereon capable of reducing drag resistance when a fluid flows thereover; said sections being attached at the leading edge thereof to said substrate, and said sections being applied to said substrate in an overlapping cascade array, wherein the trailing edge of one section overlaps the leading edges of adjacent sections.

2. The article of claim 1 wherein said sections are comprised of metal.

3. The article of claim 1 wherein said sections are comprised of a polymeric material.

4. The article of claim 1 wherein said patterned surface comprises a plurality of parallel grooves therein.

5. The article of claim 4 wherein said grooves have an essentially v-shaped cross section.

6. The article of claim 1 wherein said sections are comprised of a carrier having a layer of organic material thereon, said organic material bearing said patterned surface.

7. The article of claim 6 wherein said carrier comprises a polyester.

8. The article of claim 1 wherein attachment of said sections to said substrate is by application of an adhesive to the leading edge of each section.

9. The article of claim 8 wherein said adhesive is pressure sensitive.

Fig. 1

Fig. 2

Fig. 3